# EUROPÄISCHE PATENTSCHRIFT

(11) **EP 4 311 088 B1**
(45) Veröffentlichungstag und Bekanntmachung des Hinweises auf die Patenterteilung: **08.07.2026**
(21) Anmeldenummer: 23186009.9
(22) Anmeldetag: 18.07.2023
(51) Int. Cl.: H02K 15/043

(54) **VERFAHREN UND VORRICHTUNG ZUM HERSTELLEN EINER MEHRDRAHT-BIEGUNG EINER WELLENWICKLUNG FÜR EINE SPULENWICKLUNG EINER ELEKTRISCHEN MASCHINE**
METHOD AND DEVICE FOR PRODUCING A MULTI-WIRE BENDING OF A WAVE WINDING FOR A COIL WINDING OF AN ELECTRIC MACHINE
PROCÉDÉ ET DISPOSITIF DE FABRICATION D'UNE FLEXION MULTIFILAIRE D'UN ENROULEMENT D'ARBRE POUR UN ENROULEMENT DE BOBINE D'UNE MACHINE ÉLECTRIQUE

(30) Priorität: 21.07.2022 DE 102022118256
(43) Veröffentlichungstag der Anmeldung: 24.01.2024
(73) Patentinhaber: Aumann Espelkamp GmbH, 32339 Espelkamp (DE); ZF Friedrichshafen AG, 88046 Friedrichshafen (DE)
(72) Erfinder: Ebert, Mathias, 97267 Himmelstadt (DE); Michelberger, Robin, 97422 Schweinfurt (DE); Mehlstäubl, Kai, 97070 Würzburg (DE); Hauske, Natalie, 97508 Grettstadt (DE); Grübel, Andre, 97486 Königsberg (DE); Lüttge, Wolfgang, 31787 Hameln (DE); Sell-Le Blanc, Florian, 76185 Karlsruhe (DE)
(74) Vertreter: Bittner, Thomas L.

(56) Entgegenhaltungen:
- DE-A1- 102017 120 559
- JP-A- 2011 072 052
- US-A1- 2010 077 599

## Beschreibung

Die Erfindung betrifft ein Verfahren und eine Vorrichtung zum Herstellen einer Mehrdraht-Biegung einer Wellenwicklung für eine Spulenwicklung einer elektrischen Maschine.

### Hintergrund

Wellenwicklungen, die für eine Spulenwicklung einer elektrischen Maschine verwendet werden, werden mittels Biegen eines Drahtleiters hergestellt. Hierbei wird der Drahtleiter mehrfach gebogen, so dass ein wellenförmiger Verlauf des Drahtleiters entsteht. Bei der Biegung sind dann regelmäßig gerade Abschnitte des Drahtleiters über gebogene Abschnitte des Drahtleiters verbunden. Zum Ausbilden der Spulenwicklung der elektrischen Maschine wird die Wellenwicklung an einem Kern montiert, regelmäßig derart, dass die geraden Abschnitte des Drahtleiters in Nuten des Kerns angeordnet werden.

Das Dokument DE 10 2005 032 478 A1 offenbart ein Verfahren zum Herstellen mindestens einer Wicklung einer mehrere Pole aufweisenden elektrischen Maschine, insbesondere eines Motor-Generators, wobei die Wicklung von parallel geschaltete Wicklungsteilen gebildet wird und wobei jedem Pol mindestens eine den Wicklungsteilen zugeordnete Nutgruppe mit jeweils mehreren, bezüglich deszugeordneten Pols unterschiedliche Umfangswinkelpositionen aufweisenden Nuten zugeordnet wird, wobei Nuten mit gleicher Umfangswinkelposition gleichwertige Nuten bilden und wobei jeder Wicklungsteil der Wicklung mit gleich vielen Windungen in gleichwertigen Nuten gewickelt wird.

Das Dokument DE 10 2005 054 863 A1 offenbart ein Verfahren zur Herstellung einer Ständerwicklung für einen Ständer einer elektrischen Maschine, insbesondere für ein Kraftfahrzeug. Es ist vorgesehen, dass der mindestens eine Strang der Ständerwicklung in einer Ebene positioniert wird und dass Bereiche des Strangs (A, B, C) entlang mindestens einer Faltlinie aufeinander zu gebogen werden, so dass sich eine Schleifenwicklung ergibt.

Dokument EP 2 779 382 A2 betrifft ein Verfahren zum Herstellen von Phasenwicklungen auf einem Stift mit Nuten, wobei jede Wicklung Windungen eines elektrischen Leiters aufweist: bestehend aus axialen Litzen und transversalen Litzen, die entsprechend einer größeren Abmessung angeordnet sind. Die Axiallitzen werden von den Nuten in die Kerben eines Rotors oder Stators übertragen, so dass die Axiallitzen nach dem Durchgang der Zahnfüße in den Kerben schwingen, um der Position der Querlitzen von einer Position in eine andere Position zu gelangen, in der die Axiallitzen flach in der Breite der Nuten angeordnet sind.

Dokument WO 2019 / 166060 A1 bezieht sich auf eine als Flachwicklung ausgebildete Wickelmatte und eine daraus gebildete Spulenmatte zum Herstellen einer Spulenwicklung für eine elektrische Maschine. Um unterschiedliche Spulenmatten auch mit Lagentausch und Leitertausch automatisiert herzustellen, wird ein Zusammenfügen von Wellenwicklungsdrähten zu der Wickelmatte mittels Stecken vorgeschlagen.

Das Dokument DE 11 2019 004 070 T5 offenbart ein Verfahren zum Ausbilden einer Wicklung für eine Elektromaschine, aufweisend: Bilden einer Mehrzahl von Leitern, die eine im Wesentlichen gleiche Drahtform aufweisen, mit einer Mehrzahl von Wickelköpfen, die eine Mehrzahl von Schlitzsegmenten verbindet; Definieren eines ersten Anteils der Mehrzahl von Leitern als erste Leiter; Drehen eines zweiten Anteils der Mehrzahl von Leitern um eine Mittelachse, um die ersten Leiter zu spiegeln; Definieren des zweiten Anteils der Mehrzahl von Leitern als zweite Leiter; Kombinieren von ausgewählten der ersten Leiter und ausgewählten der zweiten Leiter, um Leiterpaare zu bilden; und Kombinieren einer Mehrzahl von Leiterpaaren, um eine Mehrfach-Leiter-Wicklung zu bilden.

Das Dokument WO 2020 / 104683 A1 offenbart ein Verfahren zum Herstellen einer Endlos-Wellenwicklung für einen Stator einer elektrischen Maschine, aufweisend: Bereitstellen eines Wickelschwerts, das eine Längsachse aufweist, wobei parallel zur Längsachse eine erste Kante und eine zweite Kante angeordnet sind und die erste Kante und die zweite Kante zueinander beabstandet ausgebildet sind; Bereitstellen einer Mehrzahl elektrischer Leiter; Wickeln der elektrischen Leiter um das Wickelschwert, wobei die elektrischen Leiter an der und / oder durch die erste Kante und die zweite Kante umgelenkt werden, und eine Mehrzahl von Wicklungsabfolgen, in Längsrichtung des Wickelschwerts nebeneinander ausgebildet werden, in einer Wicklungsabfolge, die Mehrzahl der elektrischen Leiter in Längsrichtung des Wickelschwerts nebeneinander angeordnet werden, die Mehrzahl der Wicklungsabfolgen wenigstens eine erste Abfolge und eine zweite Abfolge aufweisen, in der ersten Abfolge die Mehrzahl der elektrischen Leiter in einer ersten Reihenfolge nebeneinander angeordnet werden, und in der zweiten Abfolge die Mehrzahl der elektrischen Leiter in einer von der ersten Reihenfolge zumindest teilweise verschiedenen zweiten Reihenfolge nebeneinander angeordnet werden, oder die Reihenfolge der elektrischen Leiter der ersten Abfolge und der zweiten Abfolge gleich ist, wobei eine Wickelrichtung der ersten Abfolge um das Wickelschwert verschieden von der Wickelrichtung der zweiten Abfolge ist.

Dokument JP 2021-058076 A betrifft eine Vorrichtung zum Ausbilden eines Leiters, die eine Vielzahl von schrägen Teilen und eine Vielzahl von Auskleidungsteilen zu einer Leitergruppe bildet.

Das Dokument DE 10 2019 208 227 A1 offenbart ein Verfahren zur Herstellung einer Statorwicklung für einen Stator einer Elektromaschine, aufweisend die folgenden Schritte: Bereitstellen eines Statordrahts, Wickeln des Statordrahts um ein Wickelwerkzeug zum Erzeugen einer Wellenwicklung mit einer Mehrzahl von Wickelwellen, Halten des Statordrahts am ersten Wickelmittel und am zweiten Wickelmittel mittels einem Haltemittel, Relatives Verschieben des zweiten Wickelmittels zum ersten Wickelmittel in Richtung des Verlaufs der ersten Wicklungslängsachse, und Relatives Umklappen des ersten Wickelmittels zum zweiten Wickelmittel um die erste Wicklungslängsachse um einen Umklappwinkel. Ferner betrifft die Erfindung eine Elektromaschine, aufweisend einen Rotor und einen Stator, wobei der Stator eine Statorwicklung aus einem elektrisch isolierten Statordraht aufweist.

Dokument DE 10 2020 130 647 A1 offenbart ein Herstellverfahren zum Herstellen eines Stators mit Wellenwicklung, wobei ein Statorgehäuse mit einer Anordnung von Nuten mit einer vorgegebenen Nutbreite bereitgestellt wird und geradlinige Leiterabschnitte einer Wellenwicklungsmatte in die Nuten des Statorgehäuses eingefügt werden, so dass in wenigstens einigen der Nuten geradlinige Leiterabschnitte mehrerer Einzelspulen der Wellenwicklungsmatte übereinanderliegend angeordnet sind, wobei eine erste Einzelspule aus wenigstens zwei ersten Leitern und eine zweite Einzelspule aus wenigstens einem zweiten Leiter gebildet wird, wobei die Leiter einen rechteckigen Leiterquerschnitt haben, der in einer ersten Richtung quer zur Erstreckungsrichtung des Leiters gemessen eine Leiterbreite und in einer zweiten Richtung quer zur Erstreckungsrichtung der Leiters gemessen eine Leiterdicke hat.

Das Dokument EP 3 512 079 A1 offenbart eine Wellenwickelvorrichtung, eine Zuführvorrichtung, die wenigstens einen Wickeldraht über wenigstens eine Wickeldüse bereitstellt und in einer Zuführrichtung (Y) transportiert. Sie umfasst ferner eine Wickeleinrichtung, die den zugeführten Wickeldraht aufwickelt und einen Formkern umfasst, welcher um eine Drehachse (P1) drehbar angetrieben ist und sich in einer Transportrichtung (X) erstreckt. Die Wellenwickelvorrichtung umfasst eine Drahtmitführeinrichtung, welche dazu ausgelegt ist, zumindest eine von auf dem Formkern liegenden Wicklungen zu fassen und in Transportrichtung mitzuführen. Die Drahtmitführeinrichtung umfasst eine Mehrzahl lose Transportbackenelemente, welche jeweils über eine Mehrzahl Drahtaufnahmenuten verfügen, eine Transportbackenaufsetzeinrichtung, welche im Bereich des Formkerns angeordnet und dazu ausgelegt ist, Transportbackenelemente auf den auf dem Formkern liegenden Wickeldraht aufzusetzen, sowie eine Transportbackenaufnahmeeinrichtung, welche dazu ausgelegt ist, Transportbackenelemente aufzunehmen. Die Drahtmitführeinrichtung umfasst ferner eine Transportbackenmitführeinrichtung, welche dazu ausgelegt ist, mit den Transportbackenelementen zusammenzugreifen und diese in Transportrichtung (X) zu verschieben.

Dokument EP 3 182 568 A1 betrifft eine Wellenwickelvorrichtung zum Herstellen von Wellenwicklungen mit einer Wickeleinheit, welche eine um eine Wickelachse (A) in einer Wickelrichtung (P1) drehbare Wickelschwerteinrichtung aufweist, auf die ein Wickeldraht aufzuwickeln ist. Die Wickelvorrichtung weist wenigstens eine Drahtzuführeinrichtung auf, welche den Wickeldraht in einer Zuführrichtung (Y) der Wickeleinheit zur Bewicklung der Wickelschwerteinrichtung zuführt; ferner eine Transporteinrichtung, welche dazu ausgelegt ist, den auf die Wickelschwerteinrichtung zu einer Wellenwicklung aufgewickelten Wickeldraht in einer Transportrichtung (X) parallel zur Wickelachse (A) zu transportieren. Die Transportvorrichtung weist eine Förderanordnung auf, welche die Wellenwicklung durch die Transportvorrichtung in Transportrichtung (X) bewegt. Die Förderanordnung ist um eine koaxial zur Wickelachse verlaufende Drehachse (A) in der Wickelrichtung (P1) drehbar in der Transportvorrichtung gelagert.

Zur Erleichterung der Herstellung von Spulenwicklungen in Bauteilen von elektrischen Maschinen offenbart das Dokument DE 10 2017 120 559 A1 ein Verfahren und eine Vorrichtung zum Wickeln einer Wellenwickelmatte zum Bilden einer Spulenwicklung einer elektrischen Maschine, wobei ein oder mehrere Drähte mit einem vordefinierten Drahtabstand zwischen Drahtabschnitten gewickelt werden, wobei der Drahtabstand für unterschiedliche Bereiche der Wellenwickelmatte unterschiedlich eingestellt wird.

Das Dokument DE 10 2004 035 084 A1 offenbart ein Verfahren zur Herstellung einer Spulenwicklung für Statoren, bei der jede Spulenwindung mit jeweils einem Steg in zwei Statornuten liegt und die beiden Stege durch einen Wickelkopf verbunden sind. Dabei werden mehrere Spulenwindungen gleichzeitig durch Aufwickeln von n parallelen Drähten mit Zwischenabstand auf eine drehbare Schablone erzeugt. Um kleine Wickelköpfe zu erhalten, werden abwechselnd in einem Arbeitsschritt A aus jedem der parallelen Drähte auf der Schablone jeweils ein Steg und die Drahtlänge eines Wickelkopfs erzeugt. Dann werden in einem Arbeitsschritt B die erzeugten Stege zusammen mit dem angrenzenden ersten Ende der jeweils zugeordneten Wickelköpfe und der Drahtführer zusammen mit dem zweiten Ende dieser Wickelköpfe relativ zueinander um das n-fache des Zwischenabstands der Drähte längs der Schablone verschoben. Nach mehrfacher Wiederholung der Arbeitsschritte A und B werden dann noch die Stege für die letzten n Statornuten auf der Schablone erzeugt. Anschließend wird die Wicklung von der Schablone abgenommen, flach zusammengedrückt und in einen leistenförmigen Spulenaufnehmer gelegt. Von dort wird sie in radial außen offene Nuten eines rotorähnlichen Übertragungswerkzeugs überführt und schließlich von dort radial nach außen in die Statornuten verdrängt.

Das Dokument JP 2011-072052 A beschreibt ein Fertigungsverfahren für einen Stator, bei dem ein mäanderndes Leiterbündel unter Verwendung einer Windevorrichtung hergestellt wird. Hierbei werden Leiterbündel umfassend mehrere gestapelte, flache rechteckige Leiter, welche jeweils auf einer Spindel aufgewickelt sind, um ein rotierenden Windeschaft gewickelt.

In dem Dokument US 2010/077599 A1 ist die Herstellung einer Statorwicklung beschreiben. Die Herstellung erfolgt in einem Formungsschritt, einem Wickelschritt und einem Aufweitschritt. Im Formungsschritt wird an einem Leiterteil, das einem Spulenendteil entspricht, eine S-förmige versetzte Form gebildet. Im Wickelschritt wird der Leiter um einen Spulenkörper gewickelt. Beim Wickeln wird den Leiterteilen eine verdrehte Form gegeben, die den geneigten Teil des Spulenendes und den in einem Schlitz aufzunehmenden Leiterteil bildet. Im Expansionsschritt wird ein von der Spule entferntes Vorformprodukt in die Form der Statorwicklung expandiert.

### Zusammenfassung

Aufgabe der Erfindung ist es, ein Verfahren und eine Vorrichtung zum Herstellen einer Mehrdraht-Biegung einer Wellenwicklung für eine Spulenwicklung einer elektrischen Maschine anzugeben, mit denen eine Biegung für mehrere Drahtleiter gleichzeitig und materialschonend herstellbar ist.

Zur Lösung ist sind ein Verfahren sowie eine Vorrichtung zum Herstellen einer Mehrdraht-Biegung einer Wellenwicklung für eine Spulenwicklung einer elektrischen Maschine nach den unabhängigen Ansprüchen 1 und 13 geschaffen. Ausgestaltungen sind Gegenstand von abhängigen Ansprüchen.

Bei der Technologie ist vorgesehen, mehrere Drahtleiter jeweils mehrfach zeitgleich an einem Formkernwerkzeug der Wickeleinrichtung zu biegen, um die Mehrdraht-Biegung herzustellen. Die Zuführeinrichtung führt die mehreren Drahtleiter hierbei eine Relativbewegung zwischen den mehreren gemeinsam zu biegenden Drahtleitern in deren Linksrichtung beim Biegen zulassend der Wickeleinrichtung zu, und zwar übereinanderliegend. Eine Relativverschiebung zwischen den simultan zu biegenden Drahtleitern unterstützt ein Material schonendes Umformen des Flachdrahtmaterials, weil hierdurch insbesondere Dehnungen oder Streckungen des Flachdrahtmaterials in Biegeabschnitten gemindert oder ganz vermieden sind. Beim Biegen an dem Formkernwerkzeug können unterschiedliche Drahtleiter aufgrund der Formgebung am Formkernwerkzeug und / oder der Anordnung der mehreren Drahtleiter relativ zueinander in unterschiedlichem Umfang weiter in die Wickeleinrichtung eingezogen werden. Die von der Zuführeinrichtung zugelassene Relativbewegung zwischen den mehreren Drahtleitern vermeidet, dass hierdurch in den Biegeabschnitten des Drahtmaterials unnötige Materialspannungen entstehen.

Die mehreren Drahtleiter werden an dem Formkernwerkzeug übereinanderliegend gebogen. Die mehreren Drahtleiter, beispielsweise zwei Drahtleiter, werden hier aufeinander- / übereinanderliegend mehrfach gleichzeitig am Formkernwerkzeug gebogen. Die hierbei von der Zuführeinrichtung grundsätzlich zugelassene Relativbewegung der übereinanderliegenden Drahtleiter unterstützt die Vermeidung einer nicht beabsichtigten Streckung oder Dehnung, insbesondere eines außen- oder obenliegenden Drahtleiters im Biegeprozess.

Die mehreren Drahtleiter können beim Biegen an dem Formkernwerkzeug tatsächlich zueinander eine Relativbewegung in Längsrichtung der mehreren Drahtleiter ausführen.

Die mehreren Drahtleiter können mittels der Zuführeinrichtung über eine gemeinsame Drahtführung der Wickeleinrichtung zugeführt werden. Bei dieser Ausführungsform werden die mehreren Drahtleiter, welche gemeinsam an dem Formkernwerkzeug gleichzeitig gebogen werden, über die gemeinsame Drahtführung der Wickeleinrichtung zugeführt. Alternativ kann vorgesehen sein, ein oder mehrere Drahtleiter mittels getrennter Zuführeinrichtungen zum Biegen in der Wickeleinrichtung zuzuführen.

Die mehreren Drahtleiter können in der gemeinsamen Drahtführung über zumindest eine der folgenden Führungseinrichtungen jeweils gemeinsam geführt werden: Führungskanal, Führungsnut und Führungsöffnung. Bei der Zuführung von gemeinsam zu biegenden Drahtleitern können mehrere der Führungseinrichtungen zum Einsatz kommen. Die mehreren Drahtleiter werden hierbei gemeinsam in dem Führungskanal, der Führungsnut oder der Führungsöffnung geführt, wobei zwischen benachbarten Drahtleitern ein Berührungskontakt in der Führungseinrichtung ausgebildet sein kann. Die gemeinsam über die Führungseinrichtung zugeführten Drahtleiter werden dann am Wickelwerkzeug zeitgleich gebogen.

Zum fortgesetzten Zuführen der mehreren Drahtleiter zu der Wickeleinrichtung beim Biegen der mehreren Drahtleiter kann auf die mehreren Drahtleiter jeweils eine Zugkraft ausgeübt werden. Die Zugkraft kann beispielsweise aufgrund des Wickelns der mehreren Drahtleiter an dem Formkernwerkzeug auf die Drahtleiter eingeleitet werden, so dass im Verlauf des Wickelns weitere Abschnitte der Drahtleiter in die Wickeleinrichtung eingezogen werden. Zum Beispiel kann sich das Formkernwerkzeug zum Aufwickeln der Drahtleiter drehen, so dass mit fortgesetzter Wicklung mehr Draht eingezogen wird.

Für zumindest einen der mehreren Drahtleiter kann eine der Zugkraft entgegenwirkende Bremskraftkraft beim Zuführen des zumindest einen Drahtleiters zur Wickeleinrichtung mittels einer zugeordneten Bremskraftregeleinrichtung eingestellt werden. Mit Hilfe der entgegenwirkenden Bremskraft kann beispielsweise die Relativbewegung zwischen zwei Drahtleitern gesteuert werden, wobei die Bremskraft für die beiden Drahtleiter individuell einstellbar sein kann.

Für wenigstens einen der mehreren Drahtleiter kann die Zugkraft mittels einer zugeordneten Zugkraftregeleinrichtung eingestellt oder parametrisiert werden.

Zum fortgesetzten Zuführen der mehreren Drahtleiter zu der Wickeleinrichtung beim Biegen der mehreren Drahtleiter auf die mehreren Drahtleiter jeweils eine Vorschubkraft ausgeübt werden. Die Vorschubkraft kann für die mehreren Drahtleiter individuell einstellbar sein. Hier kann die Bremskraft entgegenwirkend ausgebildet sein.

Beim zeitgleichen Biegen der mehreren Drahtleiter an dem Formkernwerkzeug können Wickelköpfe ausgebildet werden, welche jeweils einen ersten geraden Drahtleiterabschnitt und einen zweiten geraden Drahtleiterabschnitt der Wellenwicklung verbinden, wobei die ersten geraden Drahtleiterabschnitte einer ersten Nut und die zweiten geraden Drahtleiter-abschnitte einer zweiten Nut einer Nutanordnung eines Kerns zugeordnet sind, welcher eingerichtet ist, die Wellenwicklung als Spulenwicklung aufzunehmen. Auf diese Weise werden die die geraden Drahtleiterabschnitte, die der ersten und der zweiten Nut am Kern zugeordnet sind, verbindenden Wickelköpfe zeitgleich an dem Formkernwerkzeug gebogen. Die einer Nut zugeordneten Drahtleiterabschnitte werden gleichzeitig dem Biegeprozess ausgesetzt.

Bei der Mehrdraht-Biegung der Wellenwicklung kann für die mehreren Drahtleiter jeweils ein tordierter Drahtleiterabschnitt ausgebildet werden. Der tordierte Drahtleiterabschnitt kann beispielsweise im Bereich der Wickelköpfe der mehreren Drahtleiter ausgebildet sein.

Die mehreren Drahtleiter können auf das Formkernwerkzeug flachkant gewickelt werden. Alternativ kann vorgesehen sein, dass die mehreren Drahtleiter hochkant auf das Formkernwerkzeug gewickelt werden. Dementsprechend erfolgt das Biegen am Formkernwerkzeug hochkant bzw. flachkant.

Das Formkernwerkzeug kann mit einem Wickelschwert gebildet sein, und die mehreren Drahtleiter können mittels der Wickeleinrichtung um das Wickelschwert gewickelt werden. Hierbei kann vorgesehen sein, dass das Wickelschwert beim Wickelprozess um seine Längsachse rotiert. Gleichzeitig kann hierbei eine Relativbewegung zwischen Wickelschwert und Zuführeinrichtung vorgesehen sein, um die wellenförmige Biegung herzustellen.

Die Wickeleinrichtung kann zum Beispiel mit einem Segmentbackenwickler oder einem Pratzenwickler gebildet sein. Mit dem Segmentbackenwickler können zum Beispiel unterschiedliche, einer Drahtlage in einem Stator oder Rotor entsprechende Teilungen erzeugt werden, die das Einbringen in den Stator oder Rotor erleichtern.

Die vorangehend im Zusammenhang mit dem Verfahren zum Herstellen erläuterten Ausgestaltungen können in Verbindung mit der Vorrichtung zum Herstellen der Mehrdraht-Biegung entsprechend vorgesehen sein.

### Beschreibung von Ausführungsbeispielen

Im Folgenden werden weitere Ausführungsbeispiele unter Bezugnahme auf Figuren einer Zeichnung erläutert. Hierbei zeigen:
- Fig. 1: eine schematische perspektivische Darstellung mit einer Anordnung für eine Vorrichtung zum Herstellen einer Mehrdraht-Biegung einer Wellenwicklung für eine Spulenwicklung einer elektrischen Maschine mit einer Zuführeinrichtung und einer Wickeleinrichtung;
- Fig. 2: eine schematische perspektivische Darstellung einer Mehrdraht-Biegung auf einem Formkernwerkzeug und
- Fig. 3: eine schematische perspektivische Darstellung einer weiteren Anordnung für eine Vorrichtung zum Herstellen einer Mehrdraht-Biegung einer Wellenwicklung für eine Spulenwicklung einer elektrischen Maschine mit Zuführeinrichtung und Wickeleinrichtung.

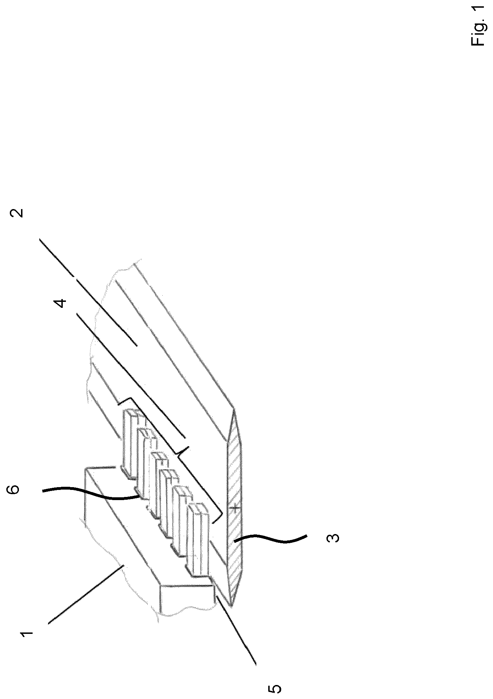

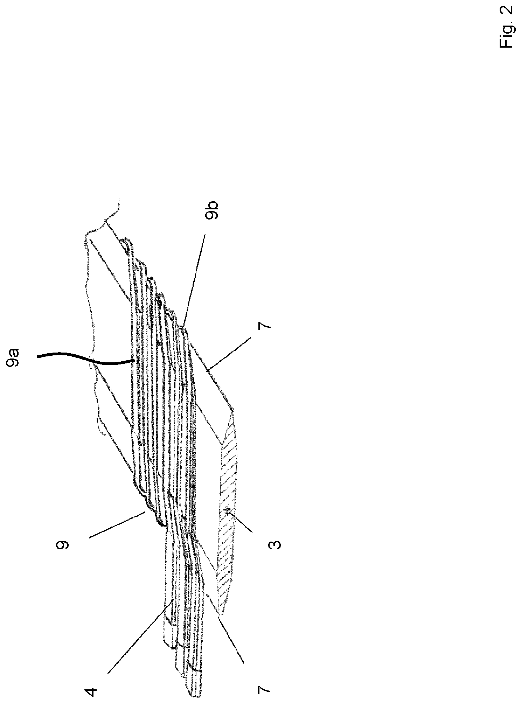

Fig. 1 zeigt eine schematische perspektivische Darstellung einer Anordnung für eine Vorrichtung zum Herstellen einer Mehrdraht-Biegung einer Wellenwicklung für eine Spulenwicklung einer elektrischen Maschine mit einer Zuführeinrichtung 1 und einer Wickeleinrichtung 2, die mit einem beispielhaft als Wickelschwert ausgebildeten Formkernwerkzeug 3 ausgeführt ist. Die Zuführeinrichtung 1 dient dazu, mehrere Drahtleiter 4 über eine Führungseinrichtung 5 dem Formkernwerkzeug 3 zuzuführen, so dass die mehreren Drahtleiter 4 gleichzeitig mehrfach um das Formkernwerkzeug 3 gewickelt werden und hierbei gebogen werden können (vgl. Fig. 2). Die mehreren Drahtleiter 4 bestehen aus einem Flachdrahtmaterial.

Die Führungseinrichtung 5 ist mit entlang des Formkernwerkzeugs 3 nebeneinanderliegend angeordneten Führungsnuten 6 gebildet, die jeweils wenigstens zwei der mehreren Drahtleiter 4 aufnehmen und zuführen und bei dem gezeigten Ausführungsbeispiel nach unten offen sind. Alternativ oder ergänzend zu offenen Führungsnuten können Führungsdüsen und / oder Führungskanäle bei der Führungseinrichtung vorgesehen sein, um die mehreren Drahtleiter 4 zuzuführen. Mit Hilfe der jeweiligen Führungseinrichtung erfolgt eine gemeinsame Drahtleiterführung für die der Führungseinrichtung zugeordneten Drahtleiter.

Pro Führungsnut 6 werden im gezeigten Beispiel zwei der mehreren Drahtleiter 4 flachkant übereinanderliegend zugeführt und dann auch flachkant übereinanderliegend am Formkernwerkzeug 3 gebogen, wobei zumindest die über dieselbe der Führungsnuten 6 zugeführten Drahtleiter am Formkernwerkzeug 3 gleichzeitig gebogen werden.

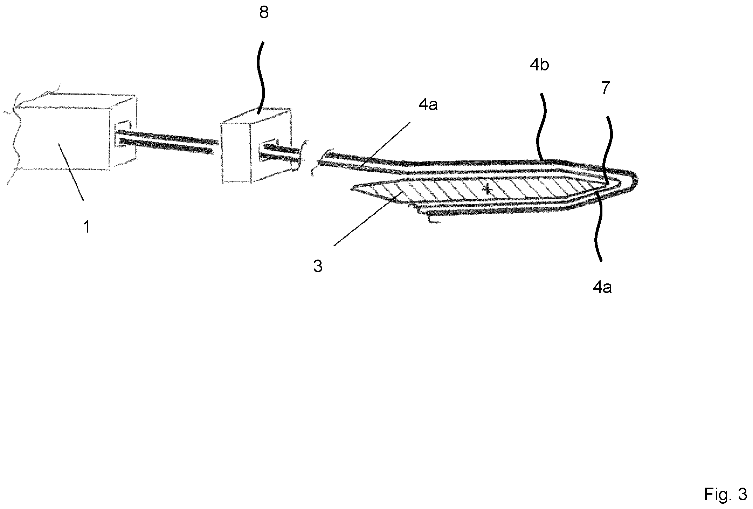

Dieses führt gemäß Fig. 3 dazu, dass ein am Formkernwerkzeug 3 untenliegender Drahtleiter 4a im Bereich einer Biegekante 7 des Formkernwerkzeugs 3 innenliegend und ein oben darüber liegender Drahtleiter 4b außenliegend angeordnete ist. Bei dem Biegeprozess werden die Drahtleiter 4a, 4b mit Hilfe der Zuführeinrichtung 1 so zugeführt, dass eine Relativbewegung zwischen den Drahtleitern 4a, 4b in Längsrichtung der beiden Drahtleiter 4a, 4b zugelassen ist, so dass aufgrund der unterschiedlichen Biegeradien im Bereich der Biegekante 7 Materialdehnungen oder -streckungen des Flachdrahtmaterials vermieden sind. Hierzu ist bei der Anordnung nach Fig. 3 eine mit einer Drahtklemme gebildete Bremseinrichtung 8 vorgesehen, die eingerichtet sein kann, auf den unteren und / oder den oberen Drahtleiter 4a, 4b eine gleiche oder unterschiedliche Bremskraftwirkung auszuüben, die dem Einziehen des Flachdrahtmaterials in die Wickeleinrichtung 2 zum Formkernwerkzeug 3 hin entgegenwirkt. Es kann vorgesehen sein, dass das Formkernwerkzeug 3 sich beim Wickeln um die eigene Längsachse (quer zur Drahtzuführrichtung) dreht, so dass die mehreren Drahtleiter 4 nach und nach weiter in die Wickeleinrichtung 2 eingezogen werden.

Die mehreren als Flachdrahtmaterial ausgeführten Drahtleiter 4 können hochkant oder flachkant der Wickeleinrichtung 2 zugeführt und hierin hochkant oder flachkant aufeinanderliegend am Formkernwerkzeug 3 mittels Biegen umgeformt werden.

Fig. 2 zeigt einen Abschnitt einer Mehrdraht-Biegung 9 für eine Wellenwicklung einer Spulenwicklung einer elektrischen Maschine auf dem Formkernwerkezug 3. Dies erfolgt im gezeigten Beispiel mittels einer kontinuierlichen Flachdrahtbiegung am Formkernwerkzeug 3. Nach der Fertigstellung wird die Mehrdraht-Biegung 9 von dem Formkernwerkzeug 3 abgezogen und kann in Nuten eines Kerns (nicht dargestellt) zum Ausbilden der Spulenwicklung eingebracht werden, wie dieses als solches in verschiedenen Ausführungsformen bekannt ist.

Alle gebogenen Drahtleiter der von der Mehrdraht-Biegung 9 gebildeten Wellenwicklung werden somit am selben Werkzeug gewickelt und gebogen.

Beim Wickeln an dem Formkernwerkzeug 3 wird Mehrdraht-Biegung 9 mit geraden Drahtabschnitten 9a und gebogenen Drahtabschnitten 9b hergestellt, welche auch als Wickelköpfe bezeichnet werden und gerade Drahtabschnitte verbinden. Um eine Wellenform für die Mehrdraht-Biegung 9 herzustellen, ist in einer Ausgestaltung zusätzlich zu Drehen des Formkernwerkzeugs 3 vorgesehen, dass dieses eine Relativbewegung in Bezug auf die Zuführeinrichtung 1 ausführt, nämlich in Längsrichtung des Formkernwerkzeugs.

Um in einer Ausführung die gebogenen Drahtleiter mit einem tordierten Abschnitt auszubilden, zum Beispiel im Bereich eines Wickelkopfes, kann vorgesehen sein, Elemente der Zuführeinrichtung 1 beim Wickeln zu drehen, zum Beispiel eine Führungsdüse, insbesondere um eine Drehsachse quer zur Längsrichtung des Formkernwerkzeugs 3.

Abweichend von dem Zuführen mehrerer Drahtmaterialien über eine gemeinsame Führungseinrichtung wie die Führungsnuten 6 in Fig. 1 kann vorgesehen sein, die mehreren Drahtleiter 4 jeweils über eine getrennte Führungseinrichtung der Wickeleinrichtung 2 zuzuführen, wobei auch hierbei die Zuführeinrichtung 1 eingerichtet ist, eine Relativbewegung von übereinander- oder aufeinander am Formkernwerkzeug 3 gewickelten Drahtleitern zuzulassen.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

### Bezugszeichenliste

- 1: Zuführeinrichtung
- 2: Wickeleinrichtung
- 3: Formkernwerkzeug
- 4: mehrere Drahtleiter
- 4a: unten liegender Drahtleiter
- 4b: oben liegender Drahtleiter
- 5: Führungseinrichtung
- 6: Führungsnuten
- 7: Biegekante am Formkernwerkzeug
- 8: Bremseinrichtung
- 9: Mehrdraht-Biegung
- 9a: gerade Drahtabschnitten bei der Mehrdraht-Biegung
- 9b: gebogene Drahtabschnitte bei der Mehrdraht-Biegung

## Patentansprüche

1. Verfahren zum Herstellen einer Mehrdraht-Biegung einer Wellenwicklung für eine Spulenwicklung einer elektrischen Maschine, mit:
- Bereitstellen mehrerer Drahtleiter (4), die jeweils als Flachdrahtmaterial ausgeführt sind;
- Zuführen der mehrerer Drahtleiter (4) mittels einer Zuführeinrichtung (1) zu einer Wickeleinrichtung (2);
- Herstellen einer Mehrdraht-Biegung (9) einer Wellenwicklung für eine Spulenwicklung einer elektrischen Maschine mittels der Wickeleinrichtung (2), wobei hierbei die mehreren Drahtleiter (4) zum Ausbilden der Mehrdraht-Biegung (9) der Wellenwicklung jeweils mehrfach zeitgleich an einem Formkernwerkzeug (3) der Wickeleinrichtung (2) übereinanderliegend gebogen und hierfür mittels der Zuführeinrichtung (1) eine Relativbewegung zwischen den mehreren Drahtleitern (4) in Längsrichtung der mehreren Drahtleiter (4) zumindest beim Biegen zulassend übereinanderliegend der Wickeleinrichtung (2) zugeführt werden; und
- Abnehmen der Mehrdraht-Biegung von dem Formkernwerkzeug (3).

2. Verfahren nach Anspruch 1, **dadurch gekennzeichnet, dass** die mehreren Drahtleiter (4), beim Biegen an dem Formkernwerkzeug (3) zueinander eine Relativbewegung in Längsrichtung der mehreren Drahtleiter (4) ausführen.

3. Verfahren nach mindestens einem der vorangehenden Ansprüche, **dadurch gekennzeichnet, dass** die mehreren Drahtleiter (4) mittels der Zuführeinrichtung (1) über eine gemeinsame Drahtführung (6) der Wickeleinrichtung (2) zugeführt werden.

4. Verfahren nach Anspruch 3, **dadurch gekennzeichnet, dass** die mehreren Drahtleiter (4) in der gemeinsamen Drahtführung (6) über zumindest eine der folgenden Führungseinrichtungen jeweils gemeinsam geführt werden: Führungskanal, Führungsnut und Führungsöffnung.

5. Verfahren nach mindestens einem der vorangehenden Ansprüche, **dadurch gekennzeichnet, dass** zum fortgesetzten Zuführen der mehreren Drahtleiter (4) zu der Wickeleinrichtung (2) beim Biegen der mehreren Drahtleiter (4) auf die mehreren Drahtleiter (4) jeweils eine Zugkraft ausgeübt wird.

6. Verfahren nach Anspruch 5, **dadurch gekennzeichnet, dass** für zumindest einen der mehreren Drahtleiter (4) eine der Zugkraft entgegenwirkende Bremskraftkraft beim Zuführen des zumindest einen Drahtleiters zur Wickeleinrichtung (2) mittels einer zugeordneten Bremskraftregeleinrichtung (8) eingestellt wird.

7. Verfahren nach Anspruch 5 oder 6, **dadurch gekennzeichnet, dass** für wenigstens einen der mehreren Drahtleiter (4) die Zugkraft mittels einer zugeordneten Zugkraftregeleinrichtung eingestellt wird.

8. Verfahren nach mindestens einem der vorangehenden Ansprüche, **dadurch gekennzeichnet, dass** zum fortgesetzten Zuführen der mehreren Drahtleiter (4) zu der Wickeleinrichtung (2) beim Biegen der mehreren Drahtleiter (4) auf die mehreren Drahtleiter (4) jeweils eine Vorschubkraft ausgeübt wird.

9. Verfahren nach mindestens einem der vorangehenden Ansprüche, **dadurch gekennzeichnet, dass** beim zeitgleichen Biegen der mehreren Drahtleiter (4) an dem Formkernwerkzeug (3) Wickelköpfe ausgebildet werden, welche jeweils einen ersten geraden Drahtleiterabschnitt und einen zweiten geraden Drahtleiterabschnitt (9a) der Wellenwicklung verbinden, wobei die ersten geraden Drahtleiterabschnitte einer ersten Nut und die zweiten geraden Drahtleiterabschnitte einer zweiten Nut einer Nutanordnung eines Kerns zugeordnet sind, welcher eingerichtet ist, die Wellenwicklung als Spulenwicklung aufzunehmen.

10. Verfahren nach mindestens einem der vorangehenden Ansprüche, dadurch **gekenn**- **zeichnet,** dass bei der Mehrdraht-Biegung (9) der Wellenwicklung für die mehreren Drahtleiter (4) jeweils ein tordierter Drahtleiterabschnitt ausgebildet wird.

11. Verfahren nach mindestens einem der vorangehenden Ansprüche, dadurch **gekenn**- **zeichnet,** dass die mehreren Drahtleiter (4) auf das Formkernwerkzeug (3) flachkant gewickelt werden.

12. Verfahren nach mindestens einem der vorangehenden Ansprüche, **dadurch gekennzeichnet, dass** das Formkernwerkzeug (3) mit einem Wickelschwert gebildet ist und die mehreren Drahtleiter (4) mittels der Wickeleinrichtung (2) um das Wickelschwert gewickelt werden.

13. Vorrichtung zum Herstellen einer Mehrdraht-Biegung einer Wellenwicklung für eine Spulenwicklung einer elektrischen Maschine, mit:
- einer Zuführeinrichtung (1), die eingerichtet ist, mehrere Drahtleiter (4) zuzuführen, die jeweils als Flachdrahtmaterial ausgeführt sind; und
- einer Wickeleinrichtung (2), welcher die Zuführeinrichtung (1) die mehreren Drahtleiter (4) zuführt;
wobei die Zuführeinrichtung (1) und die Wickeleinrichtung (2) eingerichtet sind, eine Mehrdraht-Biegung einer Wellenwicklung für eine Spulenwicklung einer elektrischen Maschine mittels der Wickeleinrichtung (2) herzustellen und hierbei die mehreren Drahtleiter (4) zum Ausbilden der Mehrdraht-Biegung der Wellenwicklung jeweils mehrfach zeitgleich an einem Formkernwerkzeug (3) der Wickeleinrichtung (2) übereinanderliegend zu biegen und mittels der Zuführeinrichtung (1) eine Relativbewegung zwischen den mehreren Drahtleitern (4) in Längsrichtung der mehreren Drahtleiter (4) beim Biegen zulassend übereinanderliegend der Wickeleinrichtung (2) zuzuführen.

## Claims

1. Method for producing a multi-wire bend of a wave winding for a coil winding of an electrical machine, comprising:
- providing a plurality of wire conductors (4), each designed as flat wire material;
- feeding the plurality of wire conductors (4) to a winding device (2) by means of a feeding device (1);
- producing a multi-wire bend (9) of a wave winding for a coil winding of an electrical machine by means of the winding device (2), wherein the plurality of wire conductors (4) for forming the multi-wire bend (9) of the wave winding are each bent several times simultaneously on a mold core tool (3) of the winding device (2) lying one above the other and for this purpose are fed lying one above the other to the winding device (2) by means of the feeding device (1) allowing a relative movement between the plurality of wire conductors (4) in the longitudinal direction of the plurality of wire conductors (4) at least during bending; and
- removing the multi-wire bend from the mold core tool (3).

2. Method according to claim 1, **characterized in that** the plurality of wire conductors (4) perform a relative movement to one another in the longitudinal direction of the plurality of wire conductors (4) during bending on the mold core tool (3).

3. Method according to at least one of the preceding claims, **characterized in that** the plurality of wire conductors (4) are fed to the winding device (2) by means of the feeding device (1) via a common wire guide (6).

4. Method according to claim 3, **characterized in that** the plurality of wire conductors (4) are each guided together in the common wire guide (6) via at least one of the following guide devices: guide channel, guide groove and guide opening.

5. Method according to at least one of the preceding claims, **characterized in that** a tensile force is applied to the plurality of wire conductors (4) during bending of the plurality of wire conductors (4) for continued feeding of the plurality of wire conductors (4) to the winding device (2).

6. Method according to claim 5, **characterized in that** a braking force counteracting the tensile force is set for at least one of the plurality of wire conductors (4) during feeding of the at least one wire conductor to the winding device (2) by means of an associated braking force control device (8).

7. Method according to claim 5 or 6, **characterized in that** the tensile force is set for at least one of the plurality of wire conductors (4) by means of an associated tensile force control device.

8. Method according to at least one of the preceding claims, **characterized in that** a feed force is applied to the plurality of wire conductors (4) during bending of the plurality of wire conductors (4) for continued feeding of the plurality of wire conductors (4) to the winding device (2).

9. Method according to at least one of the preceding claims, **characterized in that** during simultaneous bending of the plurality of wire conductors (4) on the mold core tool (3), winding heads are formed, each connecting a first straight wire conductor section and a second straight wire conductor section (9a) of the wave winding, wherein the first straight wire conductor sections are associated with a first groove and the second straight wire conductor sections are associated with a second groove of a groove arrangement of a core, which is configured to receive the wave winding as a coil winding.

10. Method according to at least one of the preceding claims, **characterized in that** a twisted wire conductor section is formed for the plurality of wire conductors (4) during the multi-wire bend (9) of the wave winding.

11. Method according to at least one of the preceding claims, **characterized in that** the plurality of wire conductors (4) are wound flat on the mold core tool (3).

12. Method according to at least one of the preceding claims, **characterized in that** the mold core tool (3) is formed with a winding blade and the plurality of wire conductors (4) are wound around the winding blade by means of the winding device (2).

13. Device for producing a multi-wire bend of a wave winding for a coil winding of an electrical machine, comprising:
- a feed device (1), which is configured to feed a plurality of wire conductors (4), each designed as flat wire material; and
- a winding device (2), to which the feed device (1) feeds the plurality of wire conductors (4);
wherein the feed device (1) and the winding device (2) are configured to produce a multi-wire bend of a wave winding for a coil winding of an electrical machine by means of the winding device (2) and to bend the plurality of wire conductors (4) for forming the multi-wire bend of the wave winding each several times simultaneously on a mold core tool (3) of the winding device (2) lying one above the other and to feed them lying one above the other to the winding device (2) by means of the feed device (1) allowing a relative movement between the plurality of wire conductors (4) in the longitudinal direction of the plurality of wire conductors (4) during bending.

## Revendications

1. Procédé de fabrication d'une flexion multifilaire d'un enroulement d'arbre pour un enroulement de bobine d'une machine électrique, avec :
- préparation de plusieurs conducteurs (4), qui sont exécutés respectivement sous la forme d'un matériau filaire plat,
- acheminement de plusieurs conducteurs (4) au moyen d'un système d'alimentation (1) vers un système d'enroulement (2),
- fabrication d'une flexion multifilaire (9) d'un enroulement d'arbre pour un enroulement de bobine d'une machine électrique au moyen d'un système d'enroulement (2), sachant qu'à cet effet plusieurs conducteurs (4) sont respectivement pliés en superposition plusieurs fois simultanément sur l'outil à noyau de formage (3) du système d'enroulement (2) pour constituer la flexion multifilaire (9) de l'enroulement d'arbre et sont à cet effet acheminés en superposition au système d'enroulement (2) au moyen du système d'alimentation (1) en adoptant au moins lors du pliage un mouvement relatif entre plusieurs conducteurs (4) dans le sens longitudinal de plusieurs conducteurs (4) et
- enlèvement du pliage multifilaire de l'outil à noyau de formage (3).

2. Procédé selon la revendication 1, **caractérisé en ce que** plusieurs conducteurs (4) exécutent lors du pliage sur l'outil à noyau de formage (3) un mouvement relatif les uns par rapport aux autres dans le sens longitudinal de plusieurs conducteurs (4).

3. Procédé selon au moins l'une quelconque des revendications précédentes, **caractérisé en ce que** plusieurs conducteurs (4) sont acheminés au système d'enroulement (2) au moyen du système d'alimentation (1) par le biais d'un guidage filaire commun (6).

4. Procédé selon la revendication 3, **caractérisé en ce que** plusieurs conducteurs (4) sont respectivement passés en commun dans le guidage filaire commun (6) par le biais d'au moins un des systèmes de guidage suivants : conduit de guidage, rainure de guidage et ouverture de guidage.

5. Procédé selon au moins l'une quelconque des revendications précédentes, **caractérisé en ce que** pour l'acheminement suivi de plusieurs conducteurs (4) vers le système d'enroulement (2), une force de traction est respectivement exercée sur plusieurs conducteurs (4) lors du pliage de plusieurs conducteurs (4).

6. Procédé selon la revendication 5, **caractérisé en ce que** pour au moins un de plusieurs conducteurs (4), une force de freinage s'opposant à la force de traction est réglée lors de l'acheminement d'au moins un conducteur vers le système d'enroulement (2) au moyen d'un système de réglage de force de freinage attribué (8).

7. Procédé selon la revendication 5 ou 6, **caractérisé en ce que** pour au moins un de plusieurs conducteurs (4), la force de traction est réglée au moyen d'un système de réglage de force de traction attribué.

8. Procédé selon au moins l'une quelconque des revendications précédentes, **caractérisé en ce que** pour l'acheminement suivi de plusieurs conducteurs (4) vers le système d'enroulement (2) une force d'avance est respectivement exercée sur plusieurs conducteurs (4) lors du pliage de plusieurs conducteurs (4).

9. Procédé selon au moins l'une quelconque des revendications précédentes, **caractérisé en ce que** lors du pliage simultanée de plusieurs conducteurs (4) sur l'outil à noyau de formage (3), des têtes d'enroulement sont constituées, lesquelles relient respectivement une première section de conducteurs droite et une deuxième section de conducteurs droite (9a) de l'enroulement d'arbre, sachant que les premières sections de conducteurs droites sont attribuées à une première rainure et les deuxièmes sections de conducteurs droites à une deuxième rainure d'un système de rainures d'un noyau, lequel est agencé pour recevoir l'enroulement d'arbre sous la forme d'un enroulement de bobine.

10. Procédé selon au moins l'une quelconque des revendications précédentes, **caractérisé en ce qu'**une section de conducteur torsadée est respectivement constituée pour la flexion multifilaire (9) de l'enroulement d'arbre pour plusieurs conducteurs (4).

11. Procédé selon au moins l'une quelconque des revendications précédentes, **caractérisé en ce que** plusieurs conducteurs (4) sont enroulés le bord à plat sur l'outil à noyau de formage (3).

12. Procédé selon au moins l'une quelconque des revendications précédentes, **caractérisé en ce que** l'outil à noyau de formage (3) est formé d'une broche d'enroulement et plusieurs conducteurs (4) sont enroulés au moyen du système d'enroulement (2) autour de la broche d'enroulement.

13. Dispositif de fabrication d'une flexion multifilaire d'un enroulement d'arbre pour un enroulement de bobine d'une machine électrique avec :
- un système d'alimentation (1), qui est agencé pour acheminer plusieurs conducteurs (4), qui sont exécutés respectivement sous la forme d'un matériau filaire plat, et
- un système d'enroulement (2), auquel le système d'alimentation (1) achemine plusieurs conducteurs (4),
sachant que le système d'alimentation (1) et le système d'enroulement (2) sont agencés pour fabriquer une flexion multifilaire d'un enroulement d'arbre pour un enroulement de bobine d'une machine électrique au moyen du système d'enroulement (2) et plier en superposition à cet effet respectivement plusieurs fois simultanément plusieurs conducteurs (4) sur un outil à noyau de formage (3) du système d'enroulement (2) pour constituer la flexion multifilaire de l'enroulement d'arbre et les acheminer en superposition au système d'enroulement (2) au moyen du système d'alimentation (1) en adoptant lors du pliage un mouvement relatif entre plusieurs conducteurs (4) dans le sens longitudinal de plusieurs conducteurs (4).
